# EUROPÄISCHE PATENTANMELDUNG

(11) **EP 1 006 060 A2**
(43) Veröffentlichungstag der Anmeldung: **07.06.2000**
(21) Anmeldenummer: 99123485.7
(22) Anmeldetag: 25.11.1999
(51) Int. Cl.: B65D 85/08, B65D 75/04

(54) **Verpackte Falthüle**

(30) Priorität: 30.11.1998 DE 29821354 U
(71) Anmelder: Kalle Nalo GmbH, 65203 Wiesbaden (DE)
(72) Erfinder: Weinheimer, Alois, 55232 Alzey (DE); Seel, Gerald, 65232 Taunusstein (DE); Rohovsky, Ralf, 65199 Wiesbaden (DE)
(74) Vertreter: Zounek, Nikolai, Dipl.-Ing.

(57) **Zusammenfassung**

Eine zu einer Raupe geraffte Falthülle 1 ist in einem Netz 10 verpackt. Die beiden einander gegenüberliegenden Netzenden 12, 13 sind Ultraschall verschweißt. Mit einem Netzende 12 oder 13 ist des weiteren ein Streifen 14, der aus dem gleichen Material wie das Netz 10 besteht, Ultraschall verschweißt.

## Beschreibung

Die Erfindung betrifft eine verpackte Falthülle bestehend aus einer zu einer Raupe gerafften Hülle, die nach dem Entraffen mit einem Produkt befüllbar ist.

Beim konventionellen Verfahren zum Füllen von solchen Hüllen mit Wurstbrät werden beispielsweise bekannte Füllmaschinen eingesetzt. Die gestreckten, flachen Hüllen, die an einem Ende abgebunden sind und beispielsweise eine Länge von 100 bis 180 cm aufweisen, werden in Wasser eingeweicht, um sie geschmeidig zu machen. Die eingeweichten Hüllen werden von Hand auf ein Füllhorn aufgeschoben und gerafft, wozu die Bedienungsperson sich ständig wiederholende Kräuselbewegungen mit der Hand ausführen muß, die außergewöhnlich ermüdend sind. Bei Hüllenlängen von mehr als 1,80 m werden Hüllen durch das Vorwässern völlig form- und gestaltslos, so daß es nicht mehr möglich ist, eine derartig lange Hülle auf das Füllrohr in der zur Verfügung stehenden Zeit, die durch den Maschinentakt vorgegeben wird, aufzuschieben. Die Hülle saugt sich dann nämlich an dem Füllrohr fest, so daß sie nicht mehr manuell gerafft werden kann.

Aus der DE-A 43 14 949 ist eine geraffie Hülle für Einzelprodukte bekannt, die kompakt verpackt ist, wodurch das Entraffen der Hülle vor dem Befüllen vermieden wird. Die geraffte und kompakt verpackte Hülle kann von der Bedienungsperson einer Füllmaschine in der Hand gehalten und auf dem Füllhorn angebracht werden, ohne daß die Hülle von Hand gerafft werden muß. Die entraffte Hülle weist dabei bevorzugt eine Länge von 1,02 bis 1,52 m auf und ist nicht länger als etwa 1,78 m.

Bei einem anderen bekannten Verfahren, das gleichfalls in der DE-A 43 14 949 unter Bezugnahme auf den Abschnitt III der Veröffentlichung "Sausage casing technology" erwähntwird, herausgegeben von Indel Karmas, veröffentlicht von Noyes Data Corporation, New Jersey (1974) werden große Hüllenlängen zu einer Raupe oder zu einem Strang gerafft. Die gerafften Stränge enthalten etwa 20 m Hülle, die auf eine Länge von etwa 35 bis 44 cm gerafft oder zusammengedrängt ist. Der Strang ist in ein Netz verpackt, welches ein Entraffen des Stranges verhindert und sein anschließendes Einweichen in Wasser zum Erzielen der Biegsamkeit und Dehnbarkeit der Hülle in gerafftem Zustand ermöglicht. Nach dem Einweichen wird die Verpackung entfernt und der Strang auf das Füllhorn geschoben. Im Vergleich zu der Verwendung von Einzelhüllen ist beim Einsatzvon Strängen eine konstruktiv aufwendige Maschine notwendig, da mit dieser die Hülle sowohl doppelt geclipt, geschnitten und in Schlingen gelegt als auch mit Brät gefüllt werden muß. Da der Strang eine weitaus größere Hüllenlänge als üblich aufweist, können mit dieser Maschine aus einem Strang zwanzig bis fünfzig Würste gefertigt werden.

Bei diesem Verfahren entfällt das Raffen der Hülle von Hand. Jedoch ist von Nachteil, daß beispielsweise der Durchmesser des Füllhorns im allgemeinen kleiner als der Durchmesser von Füllhörnern für Einzelhüllen sein muß. So wird beispielsweise bei solchen gerafften Hüllen für eine Wurst mit einem Durchmesser von 50 mm typischerweise ein Füllhorn mit einem Durchmesser von 28 mm oder weniger eingesetzt, im Vergleich dazu kann ein dickeres Füllhorn mit einem Durchmesser von 36 mm bei gleichem Durchmesser der Einzelhüllen wie der gerafften langen Hülle eingesetzt werden. Zum Verdichten von sehr langem Hüllenmaterial auf eine der Maschine angepaßten Länge muß im allgemeinen ein Raffdorn mit kleinem Durchmesser verwendetwerden. Das Problem des kleinen Innendurchmessers der gerafften Hülle wird beim Einweichen der Stränge in Wasser als Vorbereitung auf das Füllen noch verstärkt. Während des Einweichens quillt der Strang, was zu einer weiteren Verengung seiner lichten Weite führt und ein noch kleineres Füllhorn erforderlich macht. Der Einsatz eines längeren Füllhorns mit kleinerem Durchmesser ergibt eine langsamere Durchsatzleistung, vermehrte Fettschlieren und schlechtere Teilchenbestimmung.

Die Enden der Netze, mit denen geraffte Hüllen bzw. Raupen für das Befüllen mit Produkten verpackt sind, werden üblicherweise mit Metall- oder Kunststoffclips verschlossen. Beim Öffnen der Netze besteht die Gefahr, daß diese Clips in das abzufüllende Produkt gelangen können.

Aufgabe der Erfindung ist es, eine Verpackung für eine Falthülle größerer Länge, die mit einem Produkt befüllt wird zu schaffen, deren Enden ohne Clips, Kordeln oder sonstigen Verschlußmitteln fest verschlossen sind.

Diese Aufgabe wird erfindungsgemäß in der Weise gelöst, daß eine Verpackung der zu einer Raupe gerafften Hülle aus einem Netz besteht, dessen beiden, aneinander gegenüberliegenden Netzenden Ultraschall verschweißt sind.

In Ausgestaltung der Erfindung ist zumindest mit einem Netzende der Verpackung ein Streifen Ultraschall mitverschweißt.

In weiterer Ausgestaltung der Erfindung besteht der Streifen aus dem gleichen Material wie die Verpackung. Zweckmäßigerweise ist der Streifen mit einem Strichcode, Logo, Firmennamen, Handelsmarke, Warenzeichen u. dgl. bedruckt.

Mit der Erfindung werden die Vorteile erzielt, daß beim Recycling der Verpackung nur das Netz jedoch keine Verschlußmittel wie Clips, Kordeln oder dgl. entsorgt werden müssen und daß die Gefahr ausgeschlossen wird, daß ein Verschlußmittel in das abzufüllende Produkt gelangen könnte. Von Vorteil ist auch, daß an der Verpackung ein Werbehinweis auf die und eine Kennzeichnung der Falthülle problemlos angebracht werden kann.

Die Erfindung wird im folgenden anhand der Zeichnungen näher erläutert. Es zeigen:
- Fig. 1: eine schematische Seitenansicht eines Endes und eines teilweise auseinandergezogenen Teils einer Falthülle,
- Fig. 2: das umgeschlagene Ende der Falthülle nach Figur 1 im plissierten Zustand und abgebunden,
- Fig. 3: eine Seitenansicht mit dem auf die Raupe der Falthülle zugeschobenen plissierten Ende,
- Fig. 4: einen Schnitt entlang der Linie A-A der Figur 3 einer in einem Netz verpackten Falthülle, und
- Fig. 5: eine Draufsicht auf eine Verpackung nach der Erfindung, bei der ein Streifen mit einem Netzende der Verpackung mittels Ultraschall verschweißt ist.

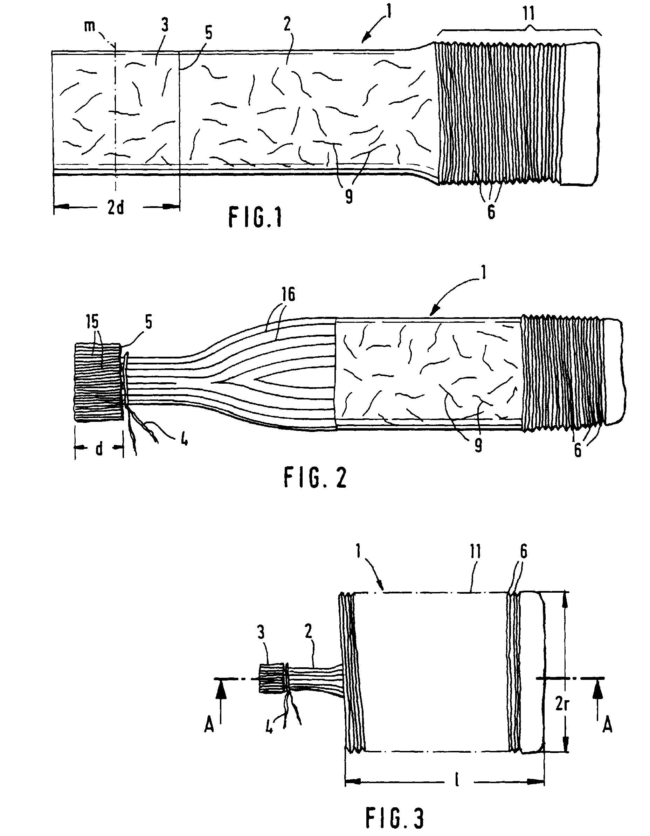

Die Figuren 1 bis 3 zeigen eine Falthülle, wie sie beispielsweise in dem deutschen Gebrauchsmuster DE 296 06061 U1 beschrieben ist.

In Figur 1 ist eine schematische Seitenansicht eines Teils einer derartigen Falthülle 1 gezeigt. Die Falthülle 1 ist im rechten Teil der Zeichnung zu einer Raupe 11 zusammengeschoben, von der sich ein ausgezogenes Teil 2 nach links erstreckt, das in ein vorderes Ende 3 übergeht. Die Raupe 11 besteht aus ineinandergeschobenen becherförmigen Falten 6. Das Ende 3 hat zwei Abschnittslängen d, und wird durch eine Achse m quer zur Längsrichtung der Falthülle 1 in zwei Hälften geteilt. Das Teil 2 und das Ende 3 weisen Knickungen 9 auf, die dadurch zustandekommen, daß das Ende 3 und das Teil 2 der Falthülle 1 zunächst in die Raupe 11 eingeschoben sind und aus dieser zum Plissieren und Abbinden des vorderen Ende 3 der Falthülle 1 herausgezogen werden. Jedoch können das Teil 2 und das Ende 3 glatt, d.h. frei von Knickungen, sein. Das vordere Ende 3 der Falthülle 1 wird quer zur Längsrichtung der Falthülle 1 entlang der Achse m umgeschlagen, so daß die zwei gleichgroßen Abschnittslängen d und d aufeinander zu liegen kommen. Die Abschnittslänge d beträgt dabei mindestens 2 cm. Die beiden aufeinanderliegenden Abschnittslängen d, d sowie das Teil 2 werden anschließend plissiert, d.h. in Längsrichtung der Falthülle 1 gefaltet, wie dies schematisch aus Figur 2 ersichtlich ist. Das umgeschlagene Ende 3 wird entlang einer Kante 5 abgebunden. Dies geschieht beispielsweise durch eine Abbindung 4 in Form einer Schnur oder einer Kordel, die an der Kante 5 des umgeschlagenen plissierten Endes 3 anliegt.

Die Abbindung 4 in Figur 2 erfolgt mit oder ohne Schlaufen, je nachdem, ob ein Aufhängen der gefüllten Falthülle 1 vorgesehen ist oder diese horizontal sowohl transportiert als auch gelagert werden soll. Die Abbindung 4 sitzt vor dem umgeschlagenen und plissierten Ende 3 und wirkt während des Abfüllens der Falthülle 1 als Selbstabsperrung, da die Abbindung 4 an der Kante 5 an dem umgelegten Ende 3 anliegt und durch den ausgeübten Fülldruck im Inneren der Falthülle 1 gegen das umgelegte Ende 3 angedrückt wird, jedoch nicht darüber hinaus geschoben werden kann. Die Abbindung 4 läßt einen Fülldruck von 0,6 bis 0,8 bar während des Abfüllens der Falthülle 1 zu, ohne daß diese aufplatzt oder das vordere Ende 3 sich öffnet. Aus Figur 2 ist ersichtlich, daß die Plissierung mit Plissierfalten 16 sich über das Ende 3 hinaus auf das Teil 2 erstreckt, wobei die Plissierfalten 16 ebenso wie Plissierfalten 15 des umgelegten Endes 3 senkrecht auf die Zeichenebene gerichtet sind. Das Ende 3 wird auf einer kombinierten Raff- und Abbindemaschine umgeschlagen und mittels der Abbindung 4 abgebunden. Mittels dieser kombinierten Raff- und Abbindemaschine werden auch die Plissierfalten 15 und 16 angebracht.

In Figur 3 ist die Hülle 1 mit zusammen- und eingeschobenem Teil 2 dargestellt. In das Innere der Raupe 11 ist das in Figur 1 ausgestreckte Teil 2 so weit eingeschoben, daß nur das abgebundene Ende 3 und ein kleiner Abschnitt des Teils 2 außerhalb der Raupe 11 sich befinden. Der Außendurchmesser 2r der Raupe 11 beträgt z.B. 30 bis 200 mm, insbesondere 80 bis 95 mm, während Länge 1 der Raupe 11 etwa 80 bis 90 mm ist. Der Innendurchmesser der Raupe 11 beträgt im letzeren Fall 65 bis 75 mm. Bei einem Innendurchmesser von beispielsweise 70 mm der Raupe 11 erfolgt das Raffen der Falthülle 1 und der Raupe 11 auf einem Raffdorn mit einem Durchmesser von 73 mm. Zum Füllen einer derartigen gerafften Falthülle 1 kann ein Füllrohr mit einem Innendurchmesser von beispielsweise 60 mm verwendet werden. Die Faltdichte, gegeben durch das Verhältnis Länge der ungerafften Hülle 1 zur Länge der Raupe 11, liegt im allgemeinen im Bereich von 30 bis 40. Der Außendurchmesser 2r der Raupe kann im Bereich von 30 bis 200 mm liegen.

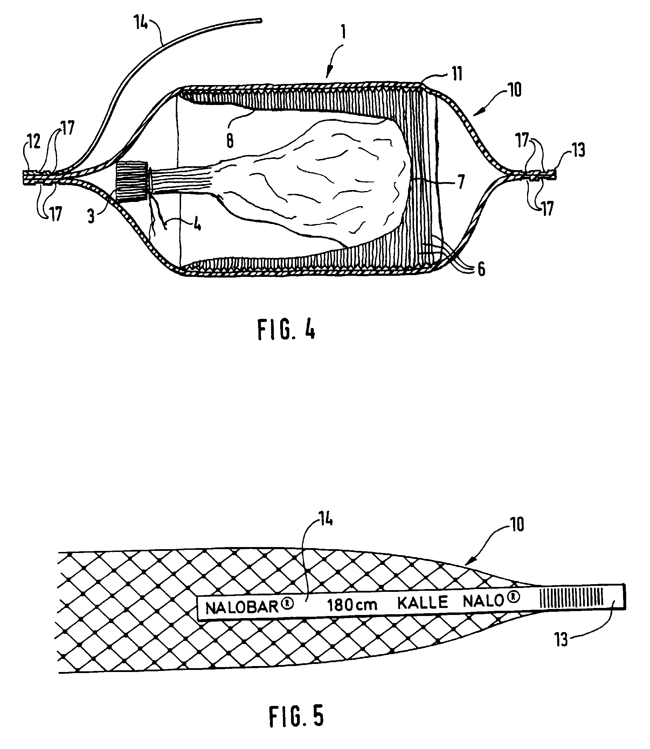

In Figur 4 ist ein Schnitt entlang der Linie A-A der Figur 3 gezeigt. Die Falten 6 der Raupe 11 sind becher- bzw. schalenförmig ausgebildet, wobei die einzelne Falte eine Höhe von etwa bis zu 20 mm aufweist. Die Falten sind ineinander zu der Raupe 11 zusammengefügt. Die sich über den Umfang der Raupe 11 erstreckenden Falten 6 sind nach innen hin einwärtsgebogen, d.h. sind nach innen hin über die Höhe des Umfangs konkav gekrümmt. Das an das vordere Ende 3 der Hülle 1 anschließende Teil 2 ist in das Innere der Raupe 11 eingestülpt und hat die Gestalt eines Bechers 8 mit gekrümmten Boden 7, wobei sich der Becher in das Innere der Raupe 11 erstreckt und nur das abgebundene Ende 3 und die Abbindung 4 von der Raupe 11 vorstehen. Für den Versand der Raupe 11 wird auch das Ende 3 noch in das Innere der Raupe 11 eingedrückt, um Platz zu sparen. In den Figuren 3 und 4 ist die Falthülle 1 zu einer Raupe 11 zusammengerafft und im wesentlichen bearbeitungsfertig zum Wässern und anschließendem Abfüllen der Falthülle auf einer Füllmaschine. Die hohe Faltdichte der Raupe 11 und die Höhe von bis zu 20 mm der einzelnen Falte 6 der Raupe sorgen für eine große Form- und Gestaltstabilität der Raupe 11, die auch nach längerem Vorwässern trotz Dehnung des Hüllmaterials im wesentlichen beibehalten werden. Die Hülle 1 kann beispielsweise einen Durchmesser von 85 bis 100 mm zu Beginn des Füllvorgangs haben und ist durch das Vorwässern soweit dehnbar, daß nach Abschluß des Füllvorgangs der Durchmesser 115 bis 120 mm betragen kann.

Die Falthülle 11 ist von einer Verpackung 10 in Gestalt eines Netzes umschlossen. Gegenüberliegende Netzenden 12 und 13 der netzförmigen Verpackung 10 sind mittels Ultraschall verschweißt, so daß die bisher übliche Verwendung von Metall-oder Kunststoffclips zum Abschließen der Netzenden entfällt. An den Netzenden 12 und 13 sind durch Schweißköpfe bzw. Schweißnasen einer Ultraschweißeinrichtung verursachten Einkerbungen 17 zu erkennen. Mit dem einen Netzende 12 der Verpackung 10 ist ein Streifen 14 mit Hilfe von Ultraschall mitverschweißt. Das Material aus dem die Verpackung 10 und der Streifen 14 bestehen, ist im allgemeinen das gleiche, jedoch können auch unterschiedliche Kunststoffe miteinander verbunden werden, vorausgesetzt, daß sie miteinander Ultraschall verschweißbar sind.

Es handelt sich hierbei um Kunststoffe, die sowohl zu Fäden und daraus hergestellten Netzen verarbeitbar sind, als auch ultraschallverschweißbar sind. Dazu zählen beispielsweise Kunststoffe aus der Gruppe HDPE, Polyamide, Polyethylenterephthalate.

Die Draufsicht der Fig. 5 zeigt die Verpackung 10 in Netzform, bei der eines der beiden Netzenden 12 und 13 mit einem Streifen 14 zusammengeschweißt ist. Der Streifen 14 ist beispielsweise mit einem Warenzeichen KALLE NALO®, einem Strichcode und weiteren Informationen bedruckt. Üblicherweise ist die Verpackung 10 nur an einem Netzende, hier z. B. am Netzende 13, mit dem Streifen 14 verschweißt, während das andere Netzende offen ist. Sobald die Falthülle 1 in die Verpackung 10 eingeschoben ist, wird das bis dahin offene Netzende ultraschallverschweißt. Selbstverständlich kann dabei auch ein Streifen 14 mitverschweißt werden, der die gleichen oder davon abweichende Informationen wie der Streifen enthält, der mit dem anderen Netzende 13 schon mitverschweißt ist.

Die verpackte Falthülle 1 wird gewässert und sobald sie geschmeidig ist, wird die Verpackung 10 aufgeschnitten und die Falthülle 1 auf ein nicht gezeigtes Füllrohr aufgeschoben. Der Fülldruck, mit dem das Wurstbrät, Käseprodukt, Fertiggericht, Feinkostgericht, Keksteig und sonstige Teige oder ein sonstiges Produkt in die Falthülle 1 eingefüllt wird, beträgt zwischen 0,6 und 0,8 bar.

## Patentansprüche

1. Verpackte Falthülle bestehend aus einer zu einer Raupe gerafften Hülle, die nach dem Entraffen mit einem Produkt befüllbar ist, dadurch gekennzeichnet, daß eine Verpackung (10) der zu einer Raupe gerafften Falthülle (1) aus einem Netz besteht, dessen beiden einander gegenüberliegenden Netzenden (12, 13) Ultraschall verschweißt sind.

2. Verpackte Falthülle nach Anspruch 1, dadurch gekennzeichnet, daß zumindest mit einem Netzende (12 oder 13) der Verpackung (10) ein Streifen (14) Ultraschall verschweißt ist.

3. Verpackte Falthülle nach Anspruch 2, dadurch gekennzeichnet, daß der Streifen (14) aus dem gleichen Material wie die Verpackung (10) besteht.

4. Verpackte Falthülle nach Anspruch 3, dadurch gekennzeichnet, daß der Streifen (14) mit einem Strichcode, Logo, Firmennamen, Handelsmarke, Warenzeichen u. dgl. Angaben bedruckt ist.

5. Verpackte Falthülle nach Anspruch 1, dadurch gekennzeichnet, daß der Steifen (14) aus einem anderen Material als die Verpackung (10) besteht und daß der Streifen und ein Netzende der Verpackung (10) miteinander Ultraschall verschweißt sind.

6. Verpackte Falthülle nach Anspruch 1, dadurch gekennzeichnet, daß die Verpackung (10) schlauchförmig und dehnbar ist und daß ihr Durchmesser im Bereich von 30 bis 200 mm liegt, entsprechend dem Durchmesser der mit einem Produkt befüllten Falthülle (1).

7. Verpackte Falthülle nach Anspruch 1, dadurch gekennzeichnet, daß die Verpackung (10) aus Kunststoff besteht, ausgewählt aus der Gruppe HDPE, Polyethylenterephthalate, Polyamide.

8. Verpackte Falthülle nach Anspruch 1, dadurch gekennzeichnet, daß jedes der beiden Netzenden (12, 13) der Verpackung (10) zusammen mit einem Streifen (14) Ultraschall verschweißt ist.

9. Verpackte Falthülle nach Anspruch 1, dadurch gekennzeichnet, daß das Produkt, mit dem die Falthülle (1) befüllbar ist, aus Wurstbrät besteht.
